(19) Europäisches Patentamt
European Patent Office
Office européen des brevets

(11) **EP 1 303 830 B1**

(12) # EUROPEAN PATENT SPECIFICATION

(45) Date of publication and mention
of the grant of the patent:
**24.07.2013 Bulletin 2013/30**

(51) Int Cl.:
***G06K 7/10*** *(2006.01)* ***G06K 7/14*** *(2006.01)*
***G06K 9/22*** *(2006.01)*

(21) Application number: **01937094.9**

(22) Date of filing: **31.05.2001**

(86) International application number:
**PCT/SE2001/001216**

(87) International publication number:
**WO 2001/093183 (06.12.2001 Gazette 2001/49)**

(54) **METHOD AND DEVICE FOR RECORDING OF INFORMATION**

VERFAHREN UND EINRICHTUNG ZUM AUFZEICHNEN VON INFORMATIONEN

PROCEDE ET DISPOSITIF D'ENREGISTREMENT D'INFORMATIONS

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **02.06.2000 SE 0002062**

(43) Date of publication of application:
**23.04.2003 Bulletin 2003/17**

(73) Proprietor: **ANOTO GROUP AB**
**227 22 Lund (SE)**

(72) Inventors:
• **ANDREASSON, Markus**
**S-223 52 Lund (SE)**
• **SOLEN, Staffan**
**S-222 29 Lund (SE)**

(74) Representative: **Perklev, Karin Cecilia**
**C Technologies AB**
**Box 4106**
**227 22 Lund (SE)**

(56) References cited:
**EP-A1- 0 449 645      WO-A1-98/20446**
**US-A- 4 949 391      US-A- 5 979 763**

**Description**

Field of the Invention

The present invention relates to a method for recording a bar code a reading device for recording a bar code , and a storage medium .

Background Art

Bar codes are today used to a great extent in the industry, trade and other branches of business. They constitute a possibility of rationally identifying an object and recording an object passing a certain point. Several standards for bar codes are already established, such as EAN (European Article Numbering), UPC (Universal Product Code) etc.

A number of variants of bar code readers are presently available. The simplest type of bar code reader is the point sensor. A point sensor is passed by the user across the base, on which the bar code is printed. The point sensor then records the bar code as a variation in received light intensity.

A condition for the point sensor to record the information correctly is that the speed at which it is moved across the base is very even. If the point sensor has a comparatively high speed in a first portion of the bar code and a comparatively low speed in a second portion of the bar code, a line in the second portion will be interpreted as wider than an identical line in the first portion. Since the requirement for an even speed of motion is very high for this type of sensor, many reading attempts will fail. The most reliable method of achieving an even speed as the sensor is being moved across the base is to move the sensor quickly. A user who has been unsuccessful in a first reading will, however, probably make the next reading more slowly since a slow reading is intuitively perceived as more accurate. The use of the point sensor as a bar code reader is thus associated with some problems, which makes its usability limited.

Another known method is to use an elongate sensor. It may consist of a row of juxtaposed CCD pixels (CCD = Charge Coupled Device). These absorb light from a surface, which is illuminated by a row of light-emitting diodes. This sensor is not passed across the bar code but is kept stationary over the same, all lines in the code being recorded simultaneously.

A drawback of the elongate sensor, in addition to its higher price, is that it cannot record bar codes of an arbitrary length. For each sensor of this type there is a certain maximum bar code length which is dependent on the number of pixels in the sensor and associated optics. Moreover, the elongate sensor can only with difficulty be used to record bar codes on a non-planar base.

A third prior-art method of recording a bar code is to use a bar code reader with a scanning laser. The bar code reader then comprises mechanically movable optics, which sweep a laser beam over a bar code. The received light is projected onto a point sensor.

The drawback of this type of bar code reader is above all a high price. However, the movable optics are also very susceptible to shocks, which restricts the usability of this bar code reader.

Summary of the Invention

An object of the present invention is to wholly or partly remedy the above problems.

This object is achieved by a method for recording a bar code according to claim 1, a reading device for recording a bar code according to claim 10 and a storage medium according to claim 13.

According to a first aspect of the invention, the above object is achieved more specifically by a method for recording a bar code, which consists of a plurality of parallel lines of varying thickness. The method comprises the steps of:

a) capturing, by means of a reading device, a sequence of two-dimensional images of at least portions of the bar code during moving of the reading device across the same;

b) detecting transitions from one colour to another of the lines of the bar code in at least a subset of the images;

c) determining, for the transitions of at least a subset of the captured images, coincidences between transitions of an image in relation to the transitions of a preceding image for obtaining conceivable dispincements between these images;

d) determining the most probable sequence of displacements for the sequence of images with a criterion based on low acceleration of the reading device; and

e) reconstructing the bar code by means of said sequence of images and said most probable sequence of displacements.

By means of such a method, a bar code can be interpreted in a very reliable manner. The reading device can be moved across the bar code in an arbitrary fashion as long as the entire bar code is recorded. The speed of the motion may vary from immobile up to the speed at which two successive images do not overlap each other any longer. Bar codes of an arbitrary length can be recorded. The reading device can be accomplished at a very low cost. Merely by adding new software to a reading pen of the type as disclosed in Applicant's Patent Application WO 98/20446, A1, and used to record text, a reading device for interpretation of bar codes can be accomplished. A person who for other purposes owns such a reading pen can thus at a very low cost provide a bar code reader which operates according to the inventive method.

According to a preferred embodiment, detection is carried out in said step b) of the transitions starting from the darkness level in pixels in a band over the image, said band extending essentially perpendicular to the direction of extension of the lines of the bar code. This results in a more reliable detection of the bar code. Preferably step b) comprises the following steps:

b1) generating, for at least a subset of the images which represent parts of the bar code, a histogram corresponding to the darkness level in said pixel along said band; and
b2) differentiating said histogram so that a sequence of transition coordinates is provided, which describe where along said band in the image the transitions of the lines of the bar code are located. This results in a more reliable detection of the bar code.

According to a preferred embodiment, differentiated histograms are generated for a plurality of bands extending over an image at different angles, the band whose differentiated histograms have the highest peaks being selected as the band which is essentially perpendicular to the direction of extension of the lines of the bar code. As a result, the bar code can be detected even if the reading device is rotated during the motion. Preferably differentiated histograms are generated for more bands in the first image of the image sequence than in subsequent images. This enables quicker data processing for subsequent images.

A transition coordinate can preferably be determined more accurately by maximizing an approximating function, such as a second degree function, which runs through the points forming the corresponding peak in said differentiated histograms. This allows more exact detection of the edges of the bar code.

Preferably conceivable displacements are determined in step c) by assuming such a displacement that two transition coordinates belonging to successive images correspond to each other, and then determining whether the remaining transition coordinates in the images correspond to each other. This enables quick and exact detection of conceivable displacements.

Preferably, error functions are determined in step d) for the images in which edges have been detected, for at least a subset of the conceivable displacements relative to the displacements of a preceding image and, for the last image in the image sequence, the displacement relative to displacements of the preceding image, which has the lowest error function, is suitably selected as the most probable displacement. This results in more reliable detection of the bar code.

Preferably, for each image the displacement with regard to the most probable displacement of the subsequent image, which has the lowest error function, is selected as the most probable displacement. This, too, results in more reliable detection of the bar code.

According to a second aspect, the present invention relates more specifically to a reading device for recording a bar code, which consists of a plurality of parallel lines of varying thickness. The reading device comprises means for carrying out the method steps of claim 1.

The reading device involves advantages corresponding to those of the above-described method and can be varied correspondingly.

According to a preferred embodiment, the reading device can be included in a reading pen. The reading device can then be accomplished by adding software to such a reading pen as disclosed in Applicant's Patent Application WO 98/20446, A1 (corresponding to patent SE 509,327, C2) .

The reading device can also be integrated in electronic equipment of some other type, such as a mobile telephone. Then the reading device can be used, for instance, to record a telephone number.

According to a third aspect, the present invention relates more specifically to a digital storage medium comprising a computer program for recording a bar code, which consists of a plurality of parallel lines of varying thickness. The program comprises instructions for carrying out the method of claim 1.

This computer program involves advantages corresponding to those of the above-described method and can be varied correspondingly.

Brief Description of the Drawings

Fig. 1 illustrates a reading device in which a method according to the present invention can be applied.
Figs 2a-2c show a method according to the present invention.
Fig. 3 shows schematically an image representing a bar code.
Fig. 4a shows an image of a bar code.
Figs 4b-4c show histograms for different bands over the bar code image in Fig. 4a.
Figs 5a-5b show differentiated histograms corresponding to the histograms in Figs 4c and 4b, respectively.
Fig. 5c shows an enlarged detail from the histogram in Fig. 5a.
Figs 6a-6d show how conceivable displacements between two successive images are determined.
Fig. 7 is a diagram of a sequence of conceivable displacements between a sequence of images.
Fig. 8a and Fig. 8b show an example of inputting of a bar code.

Description of Preferred Embodiments

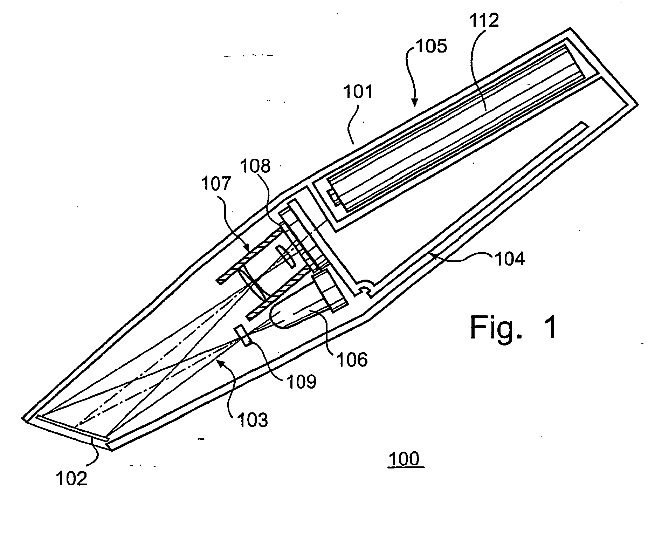

Fig. 1 shows a reading device in which a method according to the present invention can be applied.
The reading device 100 can preferably resemble the type disclosed in Applicant's Patent Application WO 98/20446, A1. This reading device, however, is used for recording of text.

The reading device 100 according to the invention then has a casing 101, which resembles an ordinary high-lighter. The reading device 100 can in a preferred embodiment also be used for inputting of text. The reading device 100 can also be integrated with other equipment, such as mobile telephones, PDA's (Personal Digital Assistant), digital cameras etc.

In one short side of the casing there is a window 102 which is to abut against or be held at a short distance from the base from which reading is intended to occur. The width and height of the window 102 essentially conform with the surface reproduced by the reading device 100 as an image is being captured. The window 102 forms an acute angle to the longitudinal axis of the casing of the reading device, so that the user of the reading device 100 is made to hold the reading device 100 at a certain predetermined angle to the base. The window 102 is slightly retracted into the casing 101 in order not to be worn against the base in the use of the reading device 100.

The casing contains essentially an optics part 103, an electronic circuitry part 104 and a power supply part 105.

The optics part 103 comprises a light-emitting diode 106, a lens system 107 and a light-sensitive sensor 108, which constitutes an interface with the electronic circuitry part 104. The light-emitting diode 106 serves to illuminate the part of the base, which is to be imaged, i.e. the part positioned under the window 102. A diffuser 109 is mounted in front of the light-emitting diode 106 to distribute the light. The purpose of the lens system 107 is to project an image of the part of the base positioned under the window 103 on the light-sensitive sensor 108. The light-sensitive sensor is preferably a two-dimensional CCD (Charge Coupled Device) sensor with a built-in A/D-converter.

The power supply unit 105 comprises a battery 112, which is mounted in the casing 101.

The electronic circuitry part 104 comprises a processor and data memories for processing images recorded by the light-sensitive sensor 108. A reading device according to the invention comprises means for carrying out the method steps that will be described below. These means suitably consist of said processor and memories provided with appropriate software. Part of or the entire recording method may also be carried out by means of an ASIC (Application Specific Integrated Circuit) circuit.

The inventive storage medium can consist of one of the above-mentioned memories in the reading device but can also be another storage medium, such as a diskette or a hard disk connected to a server.

The electronic circuitry part 104 also comprises a transmitter for transmitting information, for instance to a personal computer. This can be of the type IR (Infrared) transmitter, or a short range radio transmitter, for instance according to the BLUETOOTH technology.

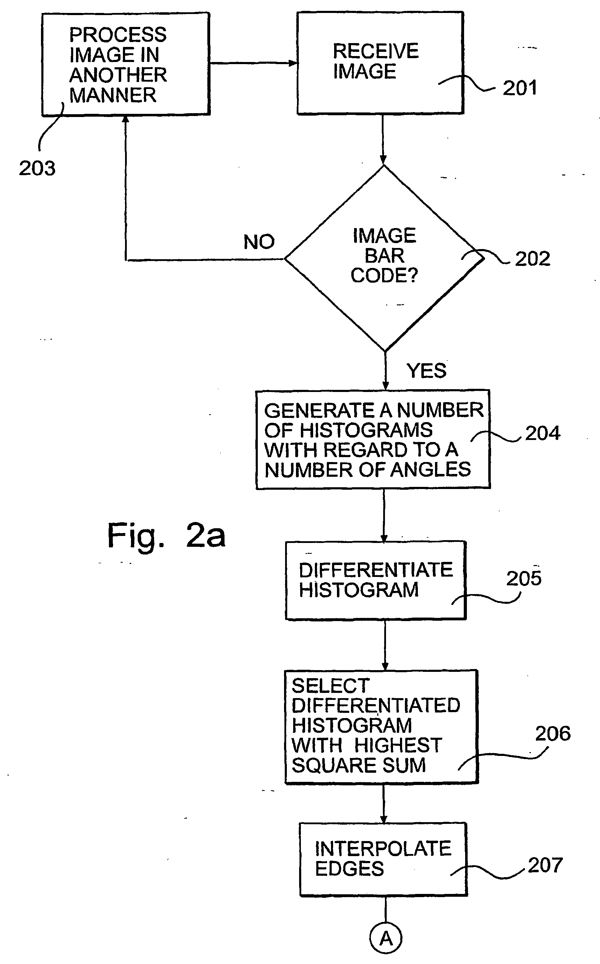

Figs 2a-2c show as a flow chart a method according to the present invention. The reading device described above captures at regular interval images of the base across which it is being passed. In a preferred embodiment the image frequency is 50 Hz. The process in which the method of the present invention is carried out thus receives an even flow of images. The images can be stored in a memory in the reading device. First the recording of all pictures can thus occur, after which the images are interpreted according to the present invention. According to the invention the interpretation can also be begun as soon as the first image has been captured.

The reading device can be used for other purposes than entering of bar codes; for instance text, digits and other types of symbols can be entered. When the process through which the inventive method is carried out receives 201 (see Fig. 2a) an image, it is checked 202 whether the received image is a bar code.

This check can be carried out relative to a set criterion. For instance, it is possible to identify the pixels located in the transitions of the lines, i.e. black pixels which have a white neighboring pixel on their right or left side, or alternatively above or below them. Subsequently, calculation, both vertically and horizon-tally, of the total length of continuous rows/columns having a length greater than one, of such edge pixels is carried out. If the ratio between the total length seen in the vertical direction (columns) and the total length in the horizontal direction (rows) exceeds a certain value, the image probably shows a bar code. This method for recognizing a bar code can also be used separately in other applications than in the method according to the present invention.

If the captured image does not describe a bar code, it is to be processed 203 in another manner. This may imply, for example, that recording of text occurs according to what is known from Applicant's Patent Application WO 98/20446, A1. If the captured image describes a bar code, it is to be processed as the first image in a sequence of images describing the bar code.

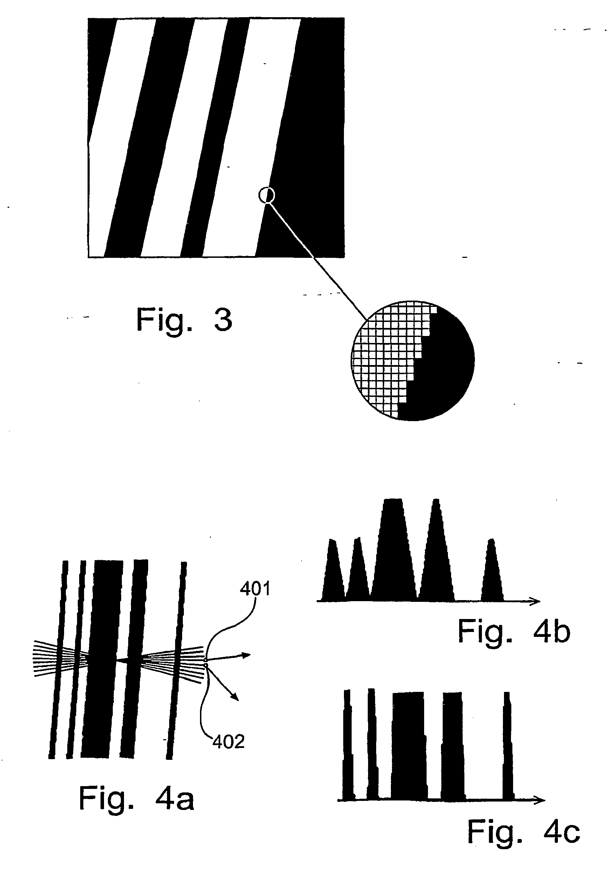

First, a number of histograms 204 (see Figs 4b, 4c) are generated, which describe the darkness level of the pixels along a number of bands 401, 402 etc. (see Fig. 4a), of a certain width, which bands extend over the image 403 at different angles. Preferably, the bands intersect an area close the center of the image. A band 402 extending perpendicular to the lines of the bar code in the image 403 will result in a histogram where the total value of the darkness degree of the pixels along the width of the band suddenly changes (see Fig. 4c) where the band extends over the transition of a line. In a histogram corresponding to a band 401 which extends more obliquely over the bar code, the total value of the darkness degree (on a gray scale) of the pixels over the width of the band will, however, change more slowly (see Fig. 4b), since pixels along the width of the band can be positioned on both sides of the transition of a line. By histogram is here generally meant a logic structure, such as a vector, which describes the darkness degree in different positions along the length of the band. In fact, the histogram need normally not be printed, but is here shown only for descriptive purposes.

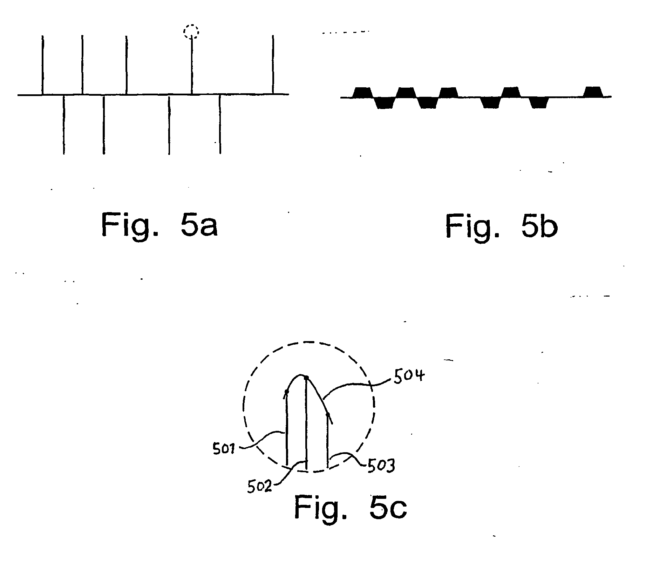

With reference once more to Fig. 2a, the above generated histograms are differentiated 205, i.e. on the basis of each histogram a new histogram is generated, which describes the difference in level between two neighboring points in the previously generated histogram. Figs 5a and 5b show differentiated histograms corresponding to those in Figs 4c and 4b, respectively.

Using a criterion which takes the height of the peaks in these differentiated histograms into consideration, the differentiated histogram corresponding to the most perpendicular band over the bar code is selected 206, with reference once more to Fig. 2a. For example, the sum of the square of the values of the differentiated histogram along the band can then be calculated. The most perpendicular band gives the highest peaks and thus the highest value of the square sum. Alternatively the sum of absolute values above a certain level can be calculated. The peaks constitute a rough estimate of the position of the transition in the band.

In order to more exactly determine the position of the transition in the selected band, interpolation 207 of the peaks in the selected histogram is carried out. Fig. 5c shows an enlargement of a detail of the differentiated histogram in Fig. 5a, more specifically a peak, which represents a transition from white to black. As appears from Fig. 5c, this peak consists of three successive bars 501, 502, 503. An approximation of the second degree 504 of these bars is effected, and the maximum of this approximation of the second degree is calculated. The transition of the line can now be assumed to be very close to this maximum and is thus determined on the sub-pixel level, i.e. with a higher resolution than the resolution of the pixels. By carrying out such interpolations of all peaks in the selected differentiated histogram, a set of transition coordinates is obtained, where the position of the transitions along the selected band is most exactly determined. By transitions is generally meant transitions from white to black and vice versa, but of course other colors may occur.

The set of transition coordinates can be made as an up/ down set where all transitions are included, or as separate up sets (white to black) and down sets (black to white). The position of the transitions in the first image thus is determined.

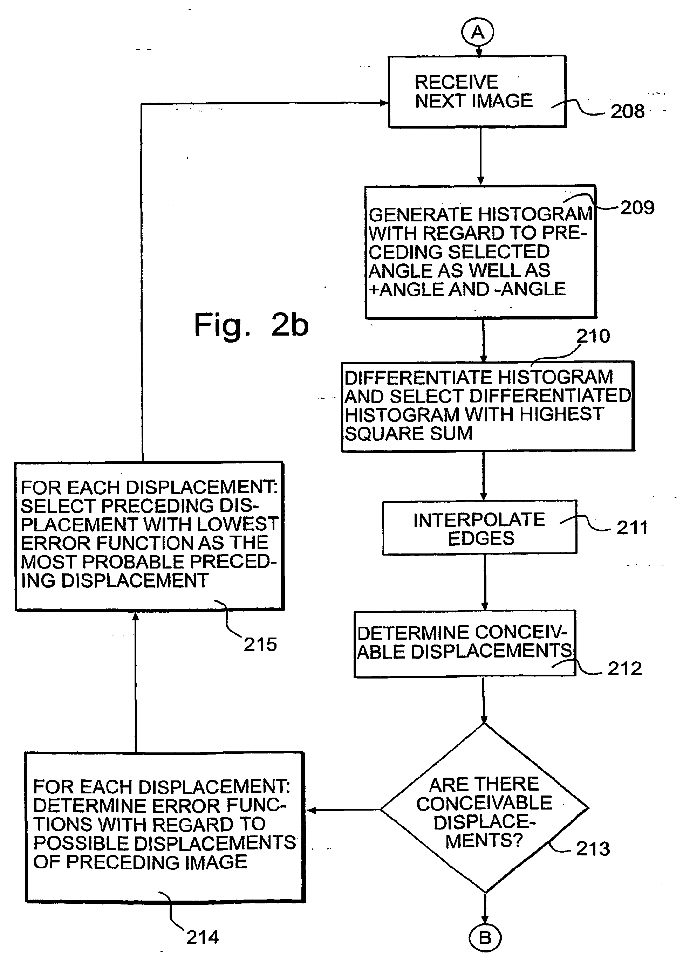

With reference to Fig. 2b, the next image is then received 208. Similarly to the first image, histograms of the darkness level of the pixels in bands over the image are generated 209. For images following the first image it is, however, normally not necessary to generate histograms for a large number of bands at different angles over the image. If the image frequency is 50 Hz, only 20 ms have passed since the preceding image was captured, and therefore it can be assumed that the angle of the reading device to the base has not changed to any considerable extent. Therefore only histograms for three different bands are generated, one at the angle which in the preceding image was found to be essentially perpendicular to the direction of extension of the lines of the bar code, and two bands angled at, for example, +2° and -2° (one turn = 360°) relative to this band. This results in quicker data processing for images following the first image.

These three histograms are differentiated 210 and the histogram having the highest peaks is selected as the most perpendicular. In the same way as for the first image, interpolation 211 is carried out to determine the position of the transitions of the lines of the bar code in the band on the sub-pixel level.

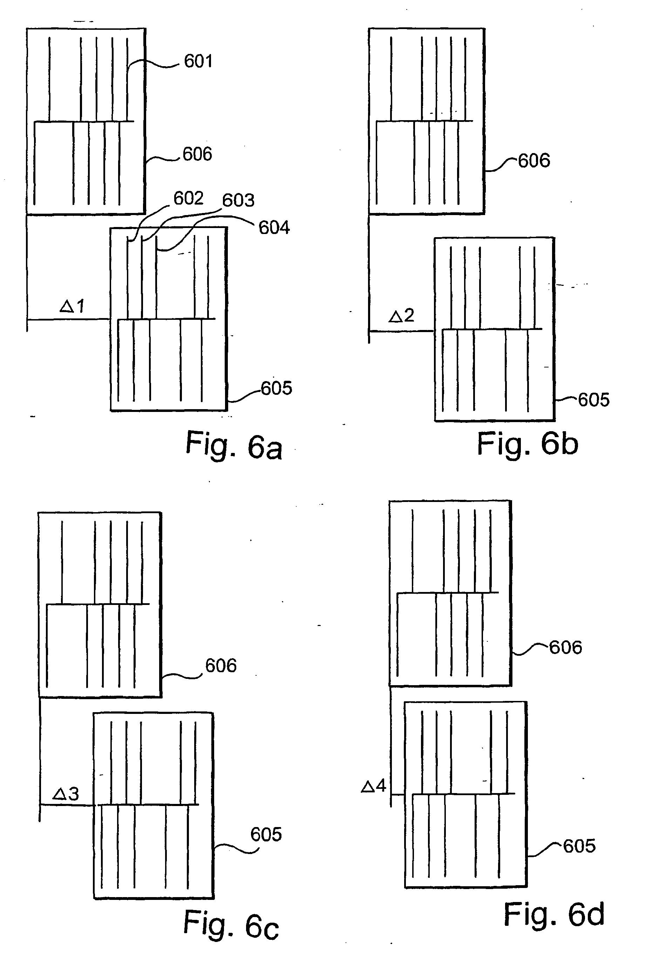

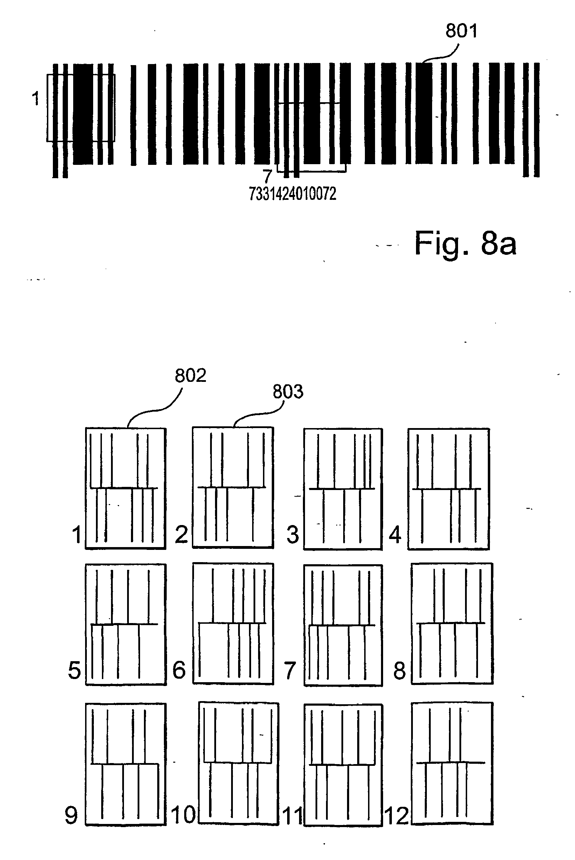

Subsequently, conceivable displacements of a later image 605 (Fig. 6, corresponding to image 7 in Fig. 8a) in relation to the preceding image 606 (image 6 in Fig. 8a) are determined, which is illustrated with reference to Figs 6a-6d. This occurs in such manner that the sets of transition coordinates, here shown as lines upwards and downwards along an axis, of the two images are compared. For example, the up-coordinate 601 (transition from white to black) in the preceding image 606 which is furthest to the right can be set as a reference point. The up-coordinates 602, 603, 604 etc. of the subsequent image then provide proposals for displacements $\Delta1$, $\Delta2$, $\Delta3$, $\Delta4$ of the reading device to the right. For each of these proposals, it is decided whether down-coordinates and the other up-coordinates coincide. In that case, this displacement is conceivable.

In Fig. 6a, the up-coordinate of the later image which is positioned furthest to the left is assumed to conform with the up-coordinate of the preceding image 606 furthest to the right, which results in a displacement (or offset) $\Delta1$. Then also the down-coordinate which is furthest to the right in the preceding image 606 conforms with the down-coordinate which is positioned furthest to the left in the later image 605. No other coordinates are positioned within the overlap of the images, the size of the overlap being determined by the displacement. $\Delta1$ therefore is a conceivable displacement.

In Fig. 6b, the up-coordinate of the later image which is positioned furthest to the left but one is assumed to correspond with the up-coordinate of the preceding image 606 furthest to the right, which gives the displacement $\Delta2$. Then also the two down-coordinates which are positioned furthest to the right in the preceding image 606 conform with the two down-coordinates which are positioned furthest to the left in the later image 605. At the same time, the two up-coordinates which are positioned furthest to the right in the preceding image 606 conform with the two up-coordinates which are positioned furthest to the left in the later image 605. $\Delta2$ therefore is a conceivable displacement.

In Fig. 6c, the up-coordinate of the later image which is positioned furthest to the left but two is assumed to conform with the up-coordinate of the preceding image 606 furthest to the right, which gives the displacement $\Delta3$. Then also the three down-coordinates which are positioned furthest to the right in the preceding image 606 conform with the three down-coordinates which are positioned furthest to the left in the later image 605. At the same time the three up-coordinates which are positioned furthest to the right in the pre-ceding image 606 conform with the three up-coordinates which are positioned furthest to the left in the later image 605. Therefore Δ3 is a conceivable displacement.

In Fig. 6d, the up-coordinate of the later image, which is furthest to the left but three, is assumed to conform with the up-coordinate of the preceding image 606 furthest to the right, which gives the displacement Δ4. However, here are conflicts between several of the other coordinates in the different images. For example, the up-coordinate which is furthest to the right but one in the preceding image 606 has no correspondence in the later image. Thus Δ4 is not a conceivable displacement.

The diagrams in Figs 6a-6d are shown only for descriptive purposes; in the inventive method the data of the images is processed as sets of coordinates. Then a certain degree of displacement is added to the coordinates, which correspond to the later image. Whether the displacement is conceivable or not is determined according to a certain criterion. For instance, the square sum of deviations in pairs of up and down coordinates of the overlapping parts of each image can be calculated (for instance, the difference between the coordinate value of the lowest up-coordinate in the overlapping part of the first image and the coordinate value of the lowest up-coordinate in the overlapping part of the later image). If the square sum of these deviations is below a certain value, the displacement is assumed to be possible.

To be able to detect also motions from the left to the right, also the corresponding method can be carried out where, for example, the up-coordinates furthest to the left in the preceding image are used as a reference point.

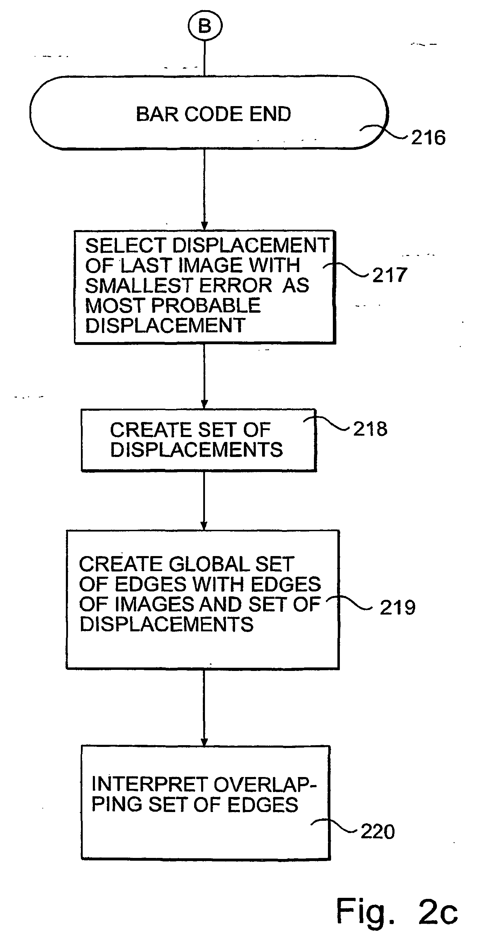

For most pairs of images in the sequence, which reproduce the bar code, it is probable that more than one conceivable displacement will be found. It is established 213 by the process whether conceivable displacements with regard to the preceding image exist. If no conceivable displacements exist, this means that the recording of the bar code has been terminated and that the final processing is to take place as will be described below with reference to Fig. 2c.

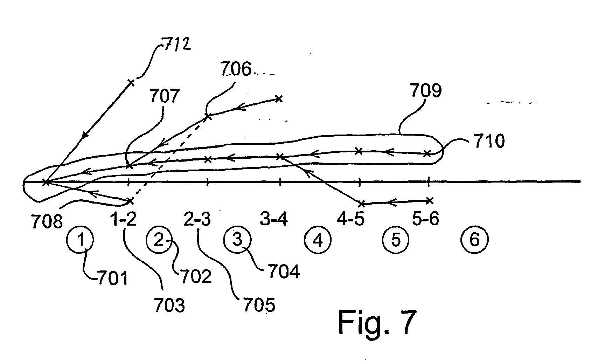

If, however, valid displacements exist, there is determined 214 for each of these an error function with regard to each of the displacements of the preceding image. This is shown in Fig. 7, which includes a diagram with a horisontal time axis whereas the amount of displacement between successive images is disposed in the direction of the vertical axis. Between the first image 701 and the second image 702 there is a set 703 containing three conceivable displacements (each denoted with an "x"), in this case two to the right 707, 712 which give displacement values above the time axis and one to the left 708 which gives a displacement below the axis, i.e. negative displacement. Between the second image 702 and the third image 704 there is a set 705 containing two conceivable displacements. In this case however, both are positive, which corresponds to motions of the reading device to the right at different speeds. For all displacements between the preceding and subsequent images in the sequence, error functions are determined, as mentioned above, relative to all displacements in the displacements of the preceding set. For example, for the greatest displacement 706, between the second 702 and the third 704 image, error functions are determined relative to the set 703 of conceivable displacements 707, 708, 712 between the first 701 and the second 702 image.

The error function $e_k$ can preferably be written as follows:

$$e_k = \max[e_{k-1}, \ (v_k - v_{k-1}) \cdot (a_k - a_{k-1})]$$

wherein

$e_{k-1}$ = error function of the displacement of a preceding image,

$v_{k-1}$ = speed of the reading device when the preceding image was captured if the displacement of the preceding image is valid,

$v_k$ = speed of the reading device when the image in question was captured if the displacement of the image in question is valid,

$a_{k-1}$ = acceleration of the reading device when the preceding image was captured if the displacement of the preceding image is valid, and

$a_k$ = acceleration of the reading device when the image in question was captured if the displacement of the image in question is valid.

It should however be noted that the above example of an error function is incomplete and, therefore, does not as such embody the claimed invention. If the difference in the speed required for the displacement of the preceding image to be valid and the speed required for the displacement of the image in question (and the displacement of the preceding image) to be valid is great, and moreover the corresponding difference in acceleration is great, a great error is given, since this is a motion which is improbable for the reading device. Even if the differences in speed and acceleration are small, a great error will, however, be given if the preceding displacement had a great error, since this error then propagates in the maximum function. Speed is here measured in the number of pixels (integer or real number) perpendicular to the lines of the bar code between two captured images.

For each conceivable displacement in an image, the displacement of the preceding image which has the lowest error function is selected (Fig. 2b, 215) as the most probable preceding displacement. For the greatest conceivable displacement 706 between the second 702 and the third 704 image, for instance the positive displacement 707 (i.e. to the right) between the first 701 and the second 702 image is selected as the most probable preceding displacement. In fig 7, each displacement points at its most probable preceding displacement. An example of a less probable preceding displacement is indicated with a dashed line.

Subsequently the process is repeated, once more with reference to Fig. 2b, when the next image is received 208.

When the process establishes 216 that no conceivable displacements relative to the preceding image exist for an arrived image, the scanned bar code is finally processed, as will be described in more detail with reference to Fig. 2c.

For the last image which had conceivable displacements relative to the preceding image and which thus was the last image describing the bar code, it is established 217 which displacement relative to displacements of the preceding image had the lowest error function. This displacement (710 in Fig. 7) is assumed to be the most probable displacement between the penultimate and the last image. Since each conceivable displacement for each image has a most probable preceding displacement, a chain of most probable displacements for the entire image sequence can now be created 218.

This chain (709 in Fig. 7) of most probable displacements forms a set of displacements which together with the transition coordinates in each image can be used to reconstruct the transition coordinates for the entire bar code into a global set of transition coordinates. This global set of transition coordinates describes the appearance of the bar code, provided that the entire bar code has been imaged. Consequently, the set of transition coordinates can be used to extract 220 the information contents of the bar code, in manners well known per se.

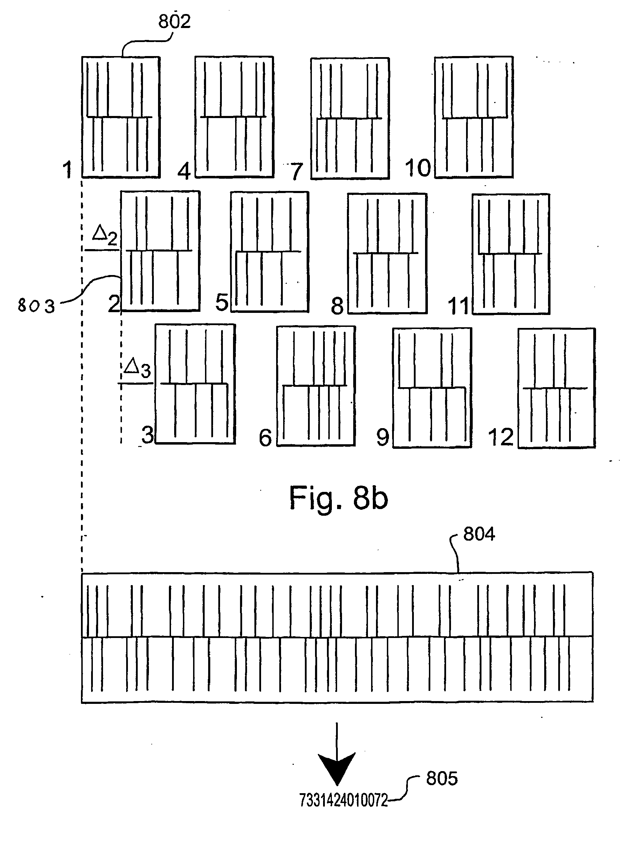

An example of the method is shown in Figs 8a and 8b. A bar code 801, in this case according to the EAN 13 Standard, is recorded. The symbol value of the bar code, i.e. the information that is to be extracted, is the string "7331424010072". Twelve images of the bar code are captured when a reading device is passed across the bar code 801. The positions of the first and the seventh image are indicated in Fig. 8a. From these twelve images, a set of transition coordinates 802, 803 etc. is produced. These are shown as diagrams in Fig. 8a. When displacements Δ2, Δ3 etc. between preceding and subsequent images have been determined, as shown in Fig. 8b, a global set of transition coordinates 804 for the entire bar code can be produced. The global set of transition coordinates 804 is then used to extract the information contents 805 of the bar code. This occurs in a manner similar to that of prior-art bar code readers.

Normally, each image comprises a portion of a bar-code. However, at bar-codes with small length the complete bar-code may be included in one image. In this case, several images of the same bar-code may increase the accuracy by taking a mean value.

The invention is not restricted by the embodiments described above and can be varied in several ways within the scope of the appended claims.

**Claims**

1. A method for recording a bar code which consists of a plurality of parallel lines of varying thickness, **characterized by** the steps of

   a) capturing, by means of a reading device, a sequence of two-dimensional images of at least portions of the bar code during moving of the reading device across the same;
   b) detecting transitions from one color to another of the lines of the bar code in at least a subset of the images,
   c) determining, for the transitions of at least a subset of the images, coincidenses between transitions of an image in relation to the transitions of a preceding image for obtainings conceivable displacements between these images,
   d) determining the most probable sequence of displacements for the sequence of images with a criterion based on low acceleration of the reading device, and
   e) reconstructing the bar code by means of said sequence of images and said most probable sequence of displacements.

2. A method for recording a bar,qode as claimed in claim 1, in which in said step b) the transitions are detected starting from the darkness level in pixels in a band over the image, said band being essentially perpendicular to the direction of extension of the lines of the bar code.

3. A method for recording a bar code as claimed in claim 1 or 2, in which step b) comprises the following steps:

   b1) generating, for at least a subset of the images which represent parts of the bar code, a histogram corresponding to the darkness level in said pixels along said band, and
   b2) differentiating said histogram so that a sequence of transition coordinates is provided, which describe where along said band in the image the transition of the lines of the bar code are located.

4. A method for recording a bar code as claimed in claim 3, in which differentiated histograms are generated for a plurality of bands extending over an image at different angles, and in which the band whose differentiated histograms have the highest peaks is selected as the band which is essentially perpendicular to the direction of extension of the lines of the bar code.

**5.** A method for recording a bar code as claimed in claim 4, in which differentiated histograms are generated for more bands in the first image of the image sequence than in subsequent images.

**6.** A method for recording a bar code as claimed in any one of claims 3, 4 or 5, in which a transition coordinate is determined more accurately by maximizing an approximating function running through the points which form the corresponding peak in said differentiated histograms.

**7.** A method for recording a bar code as claimed in any one of the receding claims, in which in step c) conceivable displacements are determined by assuming such a displacement that two transitions coordinates correspond to each other and determining whether the remaining transitions coordinates correspond to each other.

**8.** A method for recording a bar code as claimed in any one of the preceding, claims, in which in step d) for the images in which coincidences between transitions have been detected, error functions are determined for at least a subset of the conceivable displacements relative to displacements of a preceding images, and, for the last images in the image sequence, the displacement relative to displacements of the preceding image, which has the lowest error function, is selected as the most probable displacement.

**9.** A method for recording a bar code as claimed in claim 8, in which for each image preceding the last image, the displacement with regard to the most probable displacement of the subsequent image, which has the lowest error function, is selected as the most probable displacement.

**10.** A reading device for recording a bar code, which consists of a plurality of parallel lines of varying thickness, **characterized in that** the reading device comprises means for
carrying out the method steps of claim 1.

**11.** A reading pen comprising a reading device for recording a bar code as claimed in claim 10.

**12.** A mobile telephone comprising a reading device for recording a bar code as claimed in claim 10

**13.** A digital storage medium comprising a computer program for recording a bar code, which consists of a plurality of parallel lines of varying thickness, **characterized in that** the program comprises instructions for carrying out the steps of the method of claim 1.

**Patentansprüche**

**1.** Verfahren zum Aufzeichnen eines Strichcodes, der aus mehreren parallelen Linien mit verschiedener Dicke besteht, **gekennzeichnet durch** die folgenden Schritte:

a) Erfassen einer Folge von zweidimensionalen Bildern von mindestens Abschnitten des Strichcodes mittels einer Leseeinrichtung während des Bewegens der Leseeinrichtung über denselben;
b) Ermitteln von Übergängen von einer Farbe zu einer anderen der Linien des Strichcodes in mindestens einer Teilmenge der Bilder;
c) Bestimmen von Übereinstimmungen zwischen Übergängen eines Bilds bezüglich der übergänge eines vorausgegangenen Bilds zum Erhalten einer wahrnehmbaren Verschiebung zwischen diesen Bildern, für die übergänge von mindestens einer Teilmenge der erfassten Bilder;
d) Bestimmen der wahrscheinlichsten Folge von Verschiebungen für die Folge von Bildern mit einem Kriterium, das auf einer geringen Beschleunigung der Leseeinrichtung gründet; und
e) Rekonstruieren des Strichcodes mittels der Folge von Bildern und der wahrscheinlichsten Folge von Verschiebungen.

**2.** Verfahren zum Aufzeichnen eines Strichcodes nach Anspruch 1, wobei im Schritt b) die Übergänge ausgehend von dem Dunkelheitsgrad in Pixeln in einem Streifen über dem Bild ermittelt werden, wobei der Streifen im Wesentlichen senkrecht zur Ausdehnungsrichtung der Linien des Strichcodes ist.

**3.** Verfahren zum Aufzeichnen eines Strichcodes nach Anspruch 1 oder 2, wobei der Schritt b) die folgenden Schritte aufweist:

b1) Erzeugen eines Histogramms, das dem Dunkelheitsgrad in den Pixeln entlang des Streifens entspricht, für mindestens eine Teilmenge der Bilder, die Abschnitte des Strichcodes darstellen; und
b2) Differenzieren des Histogramms, derart, dass eine Folge von Übergangskoordinaten bereitgestellt wird, die beschreiben, wo entlang des Streifens in dem Bild die Übergänge der Linien des Strichcodes sich befinden.

**4.** Verfahren zum Aufzeichnen eines Strichcodes nach Anspruch 3, wobei differenzierte Histogramme für mehrere Streifen erzeugt werden, die sich in unterschiedlichen Winkeln über ein Bild erstrecken, und wobei der Streifen, dessen differenzierte Histogramme die höchsten Spitzen aufweisen, als der Streifen ausgewählt wird, der im Wesentlichen senkrecht zur Ausdehnungsrichtung der Linien des Strichcodes ist.

5. Verfahren zum Aufzeichnen eines Strichcodes nach Anspruch 4, wobei im ersten Bild der Bildfolge für mehr Streifen differenzierte Histogramme erzeugt werden als in nachfolgenden Bildern.

6. Verfahren zum Aufzeichnen eines Strichcodes nach einem der Ansprüche 3, 4 oder 5, wobei eine Übergangskoordinate durch Maximieren einer Näherungsfunktion genauer bestimmt wird, die durch die Punkte verläuft, die die entsprechende Spitze in den differenzierten Histogrammen bilden.

7. Verfahren zum Aufzeichnen eines Strichcodes nach einem der vorhergehenden Ansprüche, wobei in Schritt c) denkbare Verschiebungen durch das Annehmen einer solchen Verschiebung, dass zwei Übergangskoordinaten einander entsprechen, und durch Bestimmen, ob die übrigen Übergangskoordinaten einander entsprechen, bestimmt werden.

8. Verfahren zum Aufzeichnen eines Strichcodes nach einem der vorhergehenden Ansprüche, wobei in Schritt d) für die Bilder, in denen Übereinstimmungen zwischen Übergängen ermittelt wurden, Fehlerfunktionen für mindestens eine Teilmenge der denkbaren Verschiebungen in Bezug zu Verschiebungen eines vorhergehenden Bildes bestimmt werden und, für das letzte Bild in der Bildfolge, die Verschiebung in Bezug zu Verschiebungen des vorhergehenden Bildes, die die niedrigste Fehlerfunktion aufweist, als die wahrscheinlichste Verschiebung ausgewählt wird.

9. Verfahren zum Aufzeichnen eines Strichcodes nach Anspruch 8, wobei für jedes Bild, das dem letzten Bild vorausgeht, die Verschiebung in Bezug zur wahrscheinlichsten Verschiebung des nachfolgenden Bildes, die die niedrigste Fehlerfunktion aufweist, als die wahrscheinlichste Verschiebung ausgewählt wird.

10. Leseeinrichtung zum Aufzeichnen eines Strichcodes, der aus mehreren parallelen Linien mit verschiedener Dicke besteht, **dadurch gekennzeichnet, dass** die Leseeinrichtung Mittel zum Ausführen der Verfahrensschritte nach Anspruch 1 aufweist.

11. Lesestift, umfassend eine Leseeinrichtung zum Aufzeichnen eines Strichcodes nach Anspruch 10.

12. Mobiltelefon, umfassend eine Leseeinrichtung zum Aufzeichnen eines Strichcodes nach Anspruch 10.

13. Digitales Speichermedium, das ein Computerprogramm zum Aufzeichnen eines Strichcodes aufweist, der aus mehreren parallelen Linien mit verschiedener Dicke besteht, **dadurch gekennzeichnet, dass** das Programm Befehle zum Ausführen der Schritte des Verfahrens nach Anspruch 1 aufweist.

## Revendications

1. Procédé pour enregistrer un code barres composé d'une pluralité de lignes parallèles de différentes épaisseurs,
   **caractérisé par** les étapes suivantes :

   a) capturer, à l'aide d'un dispositif de lecture, une séquence d'images bidimensionnelles au moins de parties du code barres pendant le déplacement du dispositif de lecture le long de ce code barres ;
   b) détecter des transitions d'une couleur à l'autre des lignes du code barres dans au moins un sous-ensemble des images ;
   c) déterminer, pour les transitions d'au moins un sous-ensemble des images capturées, des coïncidences entre des transitions d'une image par rapport aux transitions d'une image précédente pour obtenir des déplacements concevables entre ces images ;
   d) déterminer la séquence la plus probable de déplacements de la séquence d'images avec un critère basé sur une faible accélération du dispositif de lecture ; et
   e) reconstruire le code barres à l'aide de ladite séquence d'images et de ladite séquence de déplacements la plus probable.

2. Procédé pour enregistrer un code barres tel que revendiqué dans la revendication 1, dans lequel, dans ladite étape b), les transitions sont détectées en commençant par le niveau d'obscurité des pixels dans une bande de l'image, ladite bande étant essentiellement perpendiculaire à la direction de l'extension des lignes du code barres.

3. Procédé pour enregistrer un code barres tel que revendiqué dans la revendication 1 ou la revendication 2, dans lequel l'étape b) comprend les étapes suivantes :

   b1) générer, pour au moins un sous-ensemble des images qui représente des parties du code barres, un histogramme correspondant au niveau d'obscurité dans lesdits pixels le long de ladite bande ; et
   b2) différencier ledit histogramme de manière à ce qu'une séquence de coordonnées de transitions soit fournie, laquelle décrit où le long de ladite bande dans l'image les transitions des lignes du code barres sont situées.

4. Procédé pour enregistrer un code barres tel que revendiqué dans la revendication 3, dans lequel des histogrammes différenciés sont générés pour une pluralité de bandes s'étendant sur une image à différents angles, et dans lequel la bande dont les histogrammes différenciés ont les pics les plus élevés est sélectionnée comme bande qui est essentiellement perpendiculaire à la direction d'extension des lignes du code barres.

5. Procédé pour enregistrer un code barres tel que revendiqué dans la revendication 4, dans lequel des histogrammes différenciés sont générés pour davantage de bandes dans la première image de la séquence d'images que dans les images suivantes.

6. Procédé pour enregistrer un code barres tel que revendiqué dans l'une quelconque des revendications 3, 4 ou 5, dans lequel une coordonnée de transition est déterminée plus précisément en maximisant une fonction d'approximation passant par les points qui forment le pic correspondant dans lesdits histogrammes différenciés.

7. Procédé pour enregistrer un code barres tel que revendiqué dans l'une quelconque des revendications précédentes, dans lequel, dans l'étape c), des déplacements concevables sont déterminés en supposant un déplacement tel que deux coordonnées de transitions correspondent l'une à l'autre et en déterminant si les coordonnées de transitions restantes correspondent entre elles.

8. Procédé pour enregistrer un code barres tel que revendiqué dans l'une quelconque des revendications précédentes, dans lequel, dans l'étape d), pour les images dans lesquelles des coïncidences entre transitions ont été détectées, des fonctions d'erreur sont déterminées pour au moins un sous-ensemble des déplacements concevables par rapport aux déplacements d'une image précédente et, pour la dernière image dans la séquence d'images, le déplacement par rapport aux déplacements de l'image précédente qui a la fonction d'erreur la plus basse est sélectionné comme étant le déplacement le plus probable.

9. Procédé pour enregistrer un code barres tel que revendiqué dans la revendication 8, dans lequel, pour chaque image précédant la dernière image, le déplacement par rapport au déplacement le plus probable de l'image subséquente, qui a la fonction d'erreur la plus basse, est sélectionné comme étant le déplacement le plus probable.

10. Dispositif de lecture pour enregistrer un code barres,

qui comporte une pluralité de lignes parallèles de différentes épaisseurs, **caractérisé en ce que** le dispositif de lecture comprend des moyens pour exécuter les étapes de procédé de la revendication 1.

11. Stylo de lecture comprenant un dispositif de lecture pour enregistrer un code barres tel que revendiqué dans la revendication 10.

12. Téléphone mobile comprenant un dispositif de lecture pour enregistrer un code barres tel que revendiqué dans la revendication 10.

13. Support de stockage numérique comprenant un programme informatique pour enregistrer un code barres qui comporte une pluralité de lignes parallèles de différentes épaisseurs, **caractérisé en ce que** le programme comprend des instructions pour exécuter les étapes du procédé de la revendication 1.

Fig. 1

PROCESS IMAGE IN ANOTHER MANNER — 203

RECEIVE IMAGE — 201

IMAGE BAR CODE? — 202

NO

YES

GENERATE A NUMBER OF HISTOGRAMS WITH REGARD TO A NUMBER OF ANGLES — 204

Fig. 2a

DIFFERENTIATE HISTOGRAM — 205

SELECT DIFFERENTIATED HISTOGRAM WITH HIGHEST SQUARE SUM — 206

INTERPOLATE EDGES — 207

A

Fig. 2b

(A)

RECEIVE NEXT IMAGE — 208

GENERATE HISTOGRAM WITH REGARD TO PRE-CEDING SELECTED ANGLE AS WELL AS +ANGLE AND -ANGLE — 209

DIFFERENTIATE HISTOGRAM AND SELECT DIFFERENTIATED HISTOGRAM WITH HIGHEST SQUARE SUM — 210

INTERPOLATE EDGES — 211

DETERMINE CONCEIV-ABLE DISPLACEMENTS — 212

ARE THERE CONCEIVABLE DISPLACE-MENTS? — 213

FOR EACH DISPLACEMENT: DETERMINE ERROR FUNC-TIONS WITH REGARD TO POSSIBLE DISPLACEMENTS OF PRECEDING IMAGE — 214

FOR EACH DISPLACEMENT: SELECT PRECEDING DIS-PLACEMENT WITH LOWEST ERROR FUNCTION AS THE MOST PROBABLE PRECED-ING DISPLACEMENT — 215

(B)

(B)

BAR CODE END ~216

SELECT DISPLACEMENT
OF LAST IMAGE WITH
SMALLEST ERROR AS ~217
MOST PROBABLE
DISPLACEMENT

CREATE SET OF ~218
DISPLACEMENTS

CREATE GLOBAL SET
OF EDGES WITH EDGES
OF IMAGES AND SET OF ~219
DISPLACEMENTS

INTERPRET OVERLAP-
PING SET OF EDGES
~220

Fig. 2c

Fig. 3

Fig. 4a

Fig. 4b

Fig. 4c

Fig. 5a

Fig. 5b

Fig. 5c

Fig. 6a

Fig. 6b

Fig. 6c

Fig. 6d

Fig. 7

801

1

7
7331424010072

Fig. 8a

802    803

1    2    3    4

5    6    7    8

9    10    11    12

Fig. 8b

**EP 1 303 830 B1**

**REFERENCES CITED IN THE DESCRIPTION**

**Patent documents cited in the description**

- WO 9820446 A1

- SE 509327 C2